# EUROPEAN PATENT SPECIFICATION

(11) **EP 2 341 249 B1**
(45) Date of publication and mention of the grant of the patent: **01.08.2018**
(21) Application number: 09823824.9
(22) Date of filing: 28.10.2009
(51) Int. Cl.: H02K 1/16, H02K 5/18, H02K 5/24, F04B 39/00, F04B 39/12, F04B 35/04, G10K 11/16

(54) **COMPRESSOR**
VERDICHTER
COMPRESSEUR

(30) Priority: 28.10.2008 KR 20080105644
(43) Date of publication of application: 06.07.2011
(73) Proprietor: LG Electronics Inc., Yeongdeungpo-gu Seoul 07336 (KR)
(72) Inventor: PARK, Song-Oun, Changwon-si Gyeongsangnam-do 641-940 (KR); LEE, Sang-Min, Masan-si Gyeongsangnam-do 631-150 (KR); JUNG, Won-Hyun, Changwon-si Gyeongsangnam-do 641-091 (KR); KANG, Kyoung-Seok, Changwon-si Gyeongsangnam-do 641-711 (KR); LEE, Hyo-Jae, Changwon-si Gyeongsangnam-do 641-030 (KR); LEE, Hun-Sik, Gimhae-si Gyeongsangnam-do 621-831 (KR); SHIM, Ji-Hyun, Changwon-si Gyeongsangnam-do 641-711 (KR)
(74) Representative: Ter Meer Steinmeister & Partner
(86) International application number: PCT/KR2009/006261
(87) International publication number: WO 2010/050744

(56) References cited:
- EP-A2- 0 909 896
- WO-A1-2007/037072
- WO-A1-2007/046594
- DE-A1- 10 218 473
- JP-A- H11 125 183
- JP-A- 2001 095 199
- JP-A- 2007 085 254
- US-A1- 2006 181 173
- US-A1- 2008 106 164

## Description

### [Technical Field]

The present invention relates to a compressor, and more particularly, to a compressor which can reduce noise and vibration generated during its operation.

### [Background Art]

In general, a compressor, which sucks refrigerant into its hermetic container and compresses and discharges the refrigerant, is used in refrigerators, air conditioners, etc. which employ a freezing cycle. The freezing cycle includes a compressor sucking and compressing low-temperature low-pressure refrigerant and discharging high-temperature high-pressure refrigerant, a condenser condensing the refrigerant discharged from the compressor, an expansion device expanding the refrigerant condensed in the condenser, and an evaporator evaporating the refrigerant expanded in the expansion device by making the refrigerant exchange heat with a medium such as the ambient air. The compressor, the condenser, the expansion device and the evaporator are connected through a series of refrigerant pipes to constitute a closed circuit.

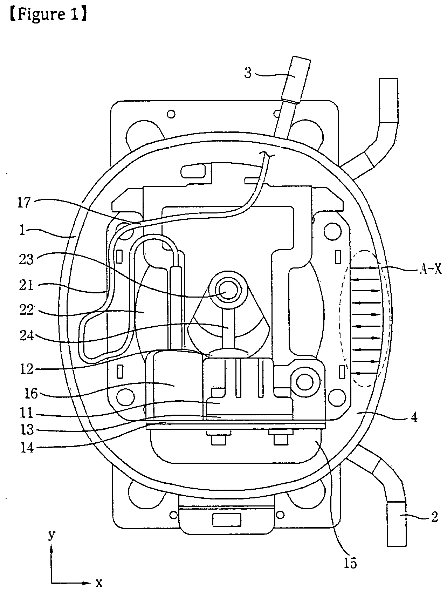

FIG. 1 is a sectional view of an example of a conventional reciprocating compressor.

As illustrated in FIG. 1, the example of the conventional reciprocating compressor includes a hermetic container 1 which is a hermetic space into/from which refrigerant is sucked and discharged, and a compression unit and a motor unit provided in the hermetic container 1 and compressing and discharging the refrigerant.

A suction pipe 2 and a discharge pipe 3 are installed respectively on the hermetic container 1 in different directions. The suction pipe 2 is connected to guide the refrigerant passing through an evaporator to the inside of the hermetic container 1, and the discharge pipe 3 is connected to guide the refrigerant compressed in the compression unit to a condenser. A determined spacing 4 is formed between the compression unit and the motor unit in the hermetic container 1.

The compression unit includes a cylinder 11 defining a compression space, a piston 12 linearly reciprocated in the cylinder 11 and compressing refrigerant, a cylinder head 13 sealing up the compression space and having a refrigerant discharge chamber and a refrigerant suction chamber separated from each other, and a valve assembly 14 interposed between the cylinder 11 and the cylinder head 13 and controlling the flow of the refrigerant sucked from the refrigerant suction chamber to the compression space or the refrigerant discharged from the compression space to the refrigerant discharge chamber. The refrigerant discharged to the refrigerant discharge chamber is supplied to the condenser side along the discharge pipe 3.

A suction muffler 15 is installed in the refrigerant suction chamber of the cylinder head 13. The suction muffler 15 serves to reduce noise of the refrigerant transferred to the inside of the hermetic container 1 through the suction pipe 2. For this purpose, the suction muffler 15 has a determined resonance space therein. A discharge muffler 16 is further provided to be adjacent to the cylinder 11 at an upper portion of the cylinder head 13. The discharge muffler 16 reduces noise contained in the refrigerant compressed by the piston 12 in the compression chamber of the cylinder 11 and is integrally formed with a top surface of the cylinder head 13.

Additionally, a loop pipe 17 is connected to the discharge muffler 16. The loop pipe 17 serves to guide high-temperature high-pressure refrigerant compressed in the cylinder 11 to be discharged to the outside of the compressor. Moreover, the loop pipe 17 is bent a few times to reduce vibration when the refrigerant flows inside.

The motor unit includes a stator 21 producing a magnetic field, a rotor 22 rotated to electromagnetically interact with the stator 21, and a rotating shaft 23 press-fit into the center of the rotor 22 and rotated with the rotor 22. In order to supply power of the motor unit to the compression unit, a connecting rod 24 linearly reciprocating the piston 12 by converting the rotational motion of the rotating shaft 23 into the linear motion is installed at a bottom end portion of the rotating shaft 23.

In the conventional hermetic compressor so constructed, when electricity is applied to the motor unit, it is applied to a coil of the stator 21, thereby producing a magnetic field. The rotor 22 is rotated with the rotating shaft 23 by the magnetic field. Here, the connecting rod 24 connected between the rotating shaft 23 and the piston 12 converts the rotational force of the rotating shaft 23 into the linear reciprocating motion of the piston 12. Accordingly, the piston 12 is linearly reciprocated in the cylinder 11 such that a pressure difference exists between the inside and the outside of the compression space of the cylinder 11. The refrigerant passing through the evaporator is guided to the inside of the hermetic container 1 along the suction pipe 2 by the pressure difference. The refrigerant guided to the inside of the hermetic container 1 is introduced into the suction muffler 15. After its noise is reduced, the refrigerant is guided to the inside of the refrigerant suction chamber of the cylinder head 13, sucked into the compression space, compressed into a high-temperature high-pressure state, passed through the refrigerant discharge chamber, and moved to the condenser along the discharge pipe 3. The refrigerant completing the compression cycle along the suction pipe 2 is moved along the discharge pipe 3. Vibration/noise is generated in X and Y directions by the components of the compression cycle.

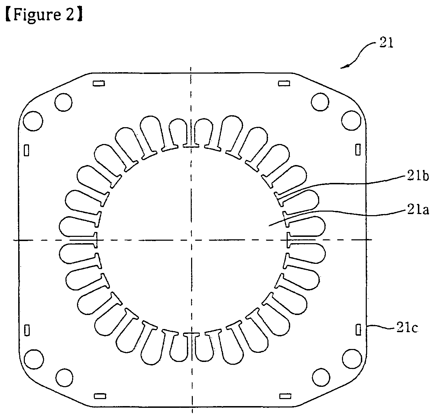

FIG. 2 is a front view of a stator applied to the example of the conventional reciprocating compressor.

As illustrated in FIGS. 1 and 2, the conventional stator 21 is formed at the outermost portion of the motor unit explained above. Here, the outer shape of the stator 21 is a rounded quadrangle. More specifically, each edge of the quadrangle has a smooth slope. A circular hollow portion 21a is provided in the center of the stator 21, and slots 21b are formed radially from the hollow portion 21a of the stator 21. A coil is wound through the slots 21b. As described above, when the coil receives power from the outside, the stator 21 becomes magnetic.

Each face of the stator 21 includes a plane portion 21c and is curved in the portions other than the plane portion 21c. If vibration generated during the operation of the compressor collides against an inner circumferential surface of the hermetic container 1, it is reflected to the plane portion 21c. Then, the vibration is reflected by the plane portion 21c to the inner circumferential surface of the hermetic container 1, thereby generating noise.

In more detail, vibration and noise generated in the hermetic container 1 collide against the inner circumferential surface of the hermetic container 1, and thus are reflected to the components. The vibration and noise reflected to the components are transferred through the spacing 4 of the hermetic container 1 such that the hermetic container 1 is excited to cause larger noise to the outside. That is, noise generated in the hermetic container 1 is successively reflected by the components, and thus transferred to the outside. Particularly, the reciprocating compressor is excited in Y direction of the hermetic container 1 in which the piston 12 is linearly reciprocated, thereby generating a lot of noise/vibration/frequency/sound wave in Y direction. The noise or the like is increased in the hermetic container 1 because it is successively reflected between the inner circumferential surface of the hermetic container 1 and the plane portion 21c of the stator 21.

In the conventional compressor, noise is generated due to the operation of the compression unit and the motor unit, the suction of refrigerant, the opening and closing of a valve, and the friction of the respective components, etc., transferred through the spacing of the hermetic container vibrating the hermetic container, and then transferred to the outside of the hermetic container. In addition, noise is generated in the hermetic container by the vibration. As almost every component of the compressor is made of a metal material which does not absorb but reflect noise, they excite and increase noise rather than dissipate it. Particularly, noise is increased because it is reflected between the hermetic container and the plane portion of the stator adjacent thereto. It is necessary to conduct the study for reducing noise.

US 2006/181173 A1 describes a compressor having a motor. The motor a has a stator and a rotor. The stator comprises a stator core, a plurality of slots provided on the stator core, and teeth divided by the slots. The stator is provided on an outer periphery thereof with a plurality of D-cuts.

JP 2001 095199 A describes a servo motor including a stator having a metal frame, a rotor disposed in an inner space of the stator, and a load-side and an anti-load side housing which rotatably support the rotor from both sides in the axial direction of the rotor. The metal frame has a shape having fins.

US 2008/106164 A1 describes a rotary electric machine including a frame having stress-relieving grooves at the outer edge portions of the frame.

### [Disclosure]

### [Technical Problem]

The present invention has been made in an effort to solve the above-described problems of the prior art, and an object of the present invention is to provide a compressor which can repeatedly irregularly reflect and dissipate noise and vibration therein. Another object of the present invention is to provide a compressor which can dissipate vibration and noise therein and improve radiation efficiency of a motor unit.

### [Technical Solution]

The objects of the present invention are solved by the features of the independent claim.

According to an aspect of the present invention for achieving the above objects, there is provided a compressor, preferably including: a hermetic container into/from which refrigerant is sucked and discharged; a compression unit provided in the hermetic container and compressing the refrigerant; a motor unit provided in the hermetic container to be connected to the compression unit and driving the compression unit; and one or more irregular reflection portions provided on an outer circumferential surface of the motor unit. In addition, the motor unit includes a rotating shaft, a rotor having the rotating shaft fixed to a center thereof, and a stator installed around the rotor and rotating the rotor by a mutual electromagnetic force, wherein the irregular reflection portion is provided on the stator.

Moreover, the compression unit includes a cylinder having a compression space in which the refrigerant is compressed, and a piston reciprocated in the compression space and compressing the refrigerant, and the motor unit further includes a connecting rod converting the rotational motion of the rotating shaft into the linear reciprocating motion of the piston, wherein the compressor is a reciprocating compressor.

Further, the irregular reflection portion is integrally formed with an outer circumferential surface of the stator, or separately formed and attached thereto.

Furthermore, the motor unit includes an inner stator, an outer stator fixed to the circumference of the inner stator to maintain a certain interval, and a permanent magnet maintaining a gap between the inner stator and the outer stator and linearly reciprocated by a mutual electromagnetic force, wherein the irregular reflection portion is provided on the outer stator. Still furthermore, the compression unit includes a fixed member having a compression space in which the refrigerant is compressed, a movable member linearly reciprocated in the fixed member and compressing the refrigerant, and one or more springs installed to elastically support the movable member, and the motor unit further includes a connection member connecting the permanent magnet to the movable member such that the permanent magnet and the movable member are linearly reciprocated as one body, wherein the compressor is a linear compressor.

Still furthermore, the irregular reflection portion is integrally formed with an outer circumferential surface of the outer stator, or separately formed and attached thereto.

Still furthermore, a spacing is defined between the hermetic container and the irregular reflection portion, and the irregular reflection portion includes one or more of a groove and a protrusion.

Still furthermore, the section of the groove or the protrusion has a curved shape or a polygonal shape.

Still furthermore, the irregular reflection portions are formed on the outer circumferential surface of the motor unit to be symmetric.

Still furthermore, the grooves or the protrusions of the irregular reflection portion are formed on the outer circumferential surface of the motor unit at regular intervals.

Still furthermore, the grooves or the protrusions of the irregular reflection portion are formed on the outer circumferential surface of the motor unit at irregular intervals.

Still furthermore, the irregular reflection portion is provided on a plane of the outer circumferential surface of the motor unit

Still furthermore, the compressor is vibrating in the refrigerant-compressing direction and the opposite direction, wherein the irregular reflection portion is provided on one or more of the outer circumferential surface of the motor unit which is parallel to the vibration direction of the compressor and the outer circumferential surface of the motor unit which is perpendicular to the vibration direction of the compressor.

Still furthermore, the section of the hermetic container cut in the vibration direction of the compressor has a circular or elliptical shape.

### [Advantageous Effects]

In the compressor according to the present invention, the irregular reflection portion is formed adjacent to the hermetic container. Although noise collides against the inside of the hermetic container and is incident on the irregular reflection portion, the irregular reflection portion irregularly reflects and dissipates the noise, thereby reducing noise. Moreover, in the compressor according to the present invention, the irregular reflection portion such as the protrusion and the groove which increases the surface area is formed on the circumference of the motor unit adjacent to the hermetic container. The irregular reflection portion dissipates noise and radiates heat generated in the motor unit, thereby improving efficiency of the entire compressor.

### [Description of Drawings]

FIG. 1 is a sectional view of an example of a conventional reciprocating compressor;
FIG. 2 is a front view of a stator applied to the example of the conventional reciprocating compressor;
FIG. 3 is a sectional view of an embodiment of a reciprocating compressor according to the present invention;
FIGS. 4 and 5 are a front view and a side view of a first embodiment of a stator applied to the embodiment of the reciprocating compressor according to the present invention;
FIG. 6 is a graph of noise levels by X-direction frequencies in the conventional reciprocating compressor and the reciprocating compressor of the present invention, respectively;
FIG. 7 is a graph of noise levels by Y-direction frequencies in the conventional reciprocating compressor and the reciprocating compressor of the present invention, respectively;
FIG. 8 is a graph of noise changes in 400 Hz frequency region in the conventional reciprocating compressor and the reciprocating compressor of the present invention, respectively;
FIG. 9 is a graph of noise changes in 500 Hz frequency region in the conventional reciprocating compressor and the reciprocating compressor of the present invention, respectively;
FIG. 10 is a view of a part of a second embodiment of the stator which is the major component of the present invention;
FIG. 11 is a view of a part of a third embodiment of the stator which is the major component of the present invention;
FIG. 12 is a view of a part of a fourth embodiment of the stator which is the major component of the present invention;
FIG. 13 is a view of a part of a fifth embodiment of the stator which is the major component of the present invention;
FIG. 14 is a view of a part of a sixth embodiment of the stator which is the major component of the present invention;
FIG. 15 is a view of a part of a seventh embodiment of the stator which is the major component of the present invention;
FIG. 16 is a view of a part of an eighth embodiment of the stator which is the major component of the present invention;
FIG. 17 is a view of a part of a ninth embodiment of the stator which is the major component of the present invention;
FIG. 18 is a view of a part of a tenth embodiment of the stator which is the major component of the present invention;
FIG. 19 is a view of a part of an eleventh embodiment of the stator which is the major component of the present invention;
FIG. 20 is a view of a part of a twelfth embodiment of the stator which is the major component of the present invention;
FIG. 21 is a view of a part of a thirteenth embodiment of the stator which is the major component of the present invention;
FIG. 22 is a view of a part of a fourteenth embodiment of the stator which is the major component of the present invention;
FIG. 23 is a view showing a state where a fifteenth embodiment of the stator which is the major component of the present invention is used in a reciprocating compressor;
FIG. 24 is a view showing a state where a sixteenth embodiment of the stator which is the major component of the present invention is used in a reciprocating compressor;
FIG. 25 is a view showing a state where a seventeenth embodiment of the stator which is the major component of the present invention is used in a reciprocating compressor;
FIG. 26 is a view showing a state where an eighteenth embodiment of the stator which is the major component of the present invention is used in a reciprocating compressor;
FIG. 27 is a view showing a state where a nineteenth embodiment of the stator which is the major component of the present invention is used in a reciprocating compressor;
FIG. 28 is a perspective view of an embodiment of a linear compressor according to the present invention; and
FIG. 29 is a side-sectional view of the embodiment of the linear compressor according to the present invention.

### [Mode for Invention]

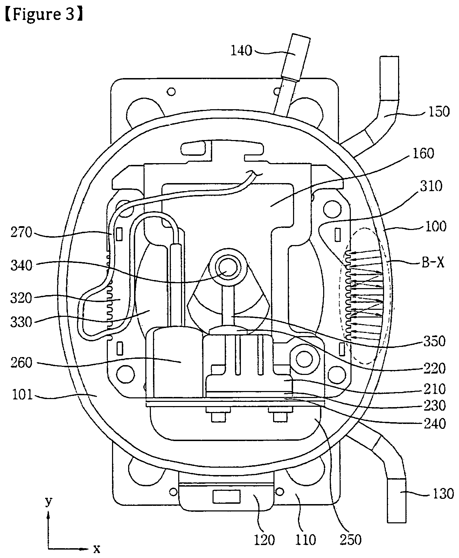

FIG. 3 is a sectional view of an embodiment of a reciprocating compressor according to the present invention.

As illustrated in FIG. 3, in the embodiment of the reciprocating compressor according to the present invention, a compression unit and a motor unit are installed in a hermetic container 100 to maintain a determined spacing 101.

A mounting plate 110 is provided below the hermetic container 100 and fixes the hermetic compressor in a determined position below the hermetic container 100. A terminal mounting portion 120 is installed on one surface of the hermetic container 100 and supplies power to the hermetic compressor.

A suction pipe 130, a discharge pipe 140 and a process pipe 150 are installed on the inside and outside of the hermetic container 100 such that refrigerant flows therethrough. The suction pipe 130 penetrates through the hermetic container 100 to transfer the refrigerant to the inside of the hermetic container 100 and is installed on the side surface of the terminal mounting portion 120. The discharge pipe 140 penetrates through the hermetic container 100 in the opposite direction to the terminal mounting portion 120 and discharges the refrigerant from the inside to the outside of the hermetic container 100. The process pipe 150 is symmetric to the suction pipe 130 to be positioned on the side surface of the discharge pipe 140 and becomes a path for injecting oil or refrigerant into the hermetic container 100.

A frame 160 is installed in the hermetic container 100, and various components constituting the compression unit and the motor unit are installed on the frame 160. The compression unit including a cylinder 210, a piston 220, a head cover 230 and a valve assembly 240 is installed at an upper portion of the frame 160, and the motor unit including a stator 320 having an irregular reflection portion 310, a rotor 330 and a rotating shaft 340 is installed at a lower portion of the frame 160.

The compression unit will be described in detail. The cylinder 210 is provided at the upper side of the frame 160 to define a compression space therein. The piston 220 is operated in the cylinder 210 to compress refrigerant in the compression space. The head cover 230 and the valve assembly 240 are installed together to block the compression space of the cylinder 210. The valve assembly 240 controls the refrigerant to be sucked and discharged into/from the compression space. Moreover, a suction muffler 250 reduces noise of the refrigerant sucked from the outside through the suction pipe 130 and transfers the refrigerant to the compression space through the valve assembly 240. A discharge muffler 260 is installed at one side of the frame 160 to communicate with a discharge chamber in the head cover 230 and reduces pulsation and noise of the refrigerant compressed in the compression space. A loop pipe 270 connects the discharge muffler 260 to the discharge pipe 140 and transfers the refrigerant.

The motor unit will be described in detail. The irregular reflection portion 310 dissipates noise and vibration by preventing the noise and vibration colliding against an inner surface of the hermetic container 100 from being reflected again to the inner surface of the hermetic container 100. The irregular reflection portion 310 is formed on an outer circumferential surface of the stator 320 adjacent to the inner surface of the hermetic container 100 and includes one or more of a concave groove and a convex protrusion. The stator 320 is fixed to define a determined spacing 101 with the inner surface of the hermetic container 100. The outer circumference of the stator 320 may be formed in various shapes such as a polygon having four plane portions, a circle, a quadrangle, and so on. The irregular reflection portion 310 may be integrally formed with an outer circumferential surface of the stator 320, or separately formed and attached thereto, regardless of the shape of the stator 320. Various embodiments of the irregular reflection portion 310 will be described later below. The rotor 330 maintains an interval from the inside of the stator 320. As the stator 320 is supplied with current, the rotor 330 is rotated by an electromagnetic force. The rotating shaft 340 is press-fit into the center of the rotor 330 to penetrate through the frame 160 and rotated with the rotor 330. Further, a connecting rod 350 connects a top end of the rotating shaft 340 to the piston 220 and converts the rotational force of the rotor 330 and the rotating shaft 340 into the linear reciprocating motion of the piston 220.

The operation of the reciprocating compressor according to the present invention will be described in detail.

Power is supplied to the terminal mounting portion 120 mounted on one surface of the hermetic container 100. As the power is supplied to the stator 320, the rotor 330 is rotated with the rotating shaft 340 by the electromagnetic interaction with the stator 320. The rotational motion of the rotating shaft 340 is converted into the linear reciprocating motion by the connecting rod 350 and transferred to the piston 220, such that the piston 220 is linearly reciprocated between the top dead center and the bottom dead center in the compression space of the cylinder 210.

The linear reciprocating motion of the piston 220 changes a pressure in the compression space. If the piston 220 moves from the top dead center to the bottom dead center, the pressure of the compression space becomes lower than that of the suction muffler 250, and thus a suction valve of the valve assembly 240 is open. The refrigerant of the suction pipe 130 and the suction muffler 250 is introduced into the compression space until the pressure of the suction muffler 250 is the same as the pressure of the compression space. On the contrary, if the piston 220 moves from the bottom dead center to the top dead center, the pressure of the compression space continuously rises. When the pressure reaches a determined discharge pressure, a discharge valve of the valve assembly 240 is open. The refrigerant compressed into a high pressure in the compression space is discharged through the discharge chamber of the head cover 230 along the discharge muffler 260, the loop pipe 270 and the discharge pipe 140.

When the reciprocating compressor is operated, vibration and noise are generated by its components. As illustrated in FIG. 3, reflection directions of the noise/vibration generated in the hermetic container 100 are indicated by arrows B-X in the irregular reflection portion 310-provided region. Although noise/vibration is reduced in the spacing 101 in the hermetic container 100 on each face of the stator 320 having the irregular reflection portion 310 like B-X, only one side is illustrated in the drawing and described below in detail.

More specifically, noise/vibration/sound wave/frequency is generated during the operation of the reciprocating compressor such that the hermetic container 100 is vibrated in X and Y directions of the spacing 101. A lot of vibration/noise is generated in Y direction which is the vibration direction of the compressor in which the piston 220 is linearly reciprocated. The noise/frequency of the components collides against an inner circumferential surface of the hermetic container 100 through the spacing 101 and is vibrated in the spacing 101 in X and Y directions. The noise/frequency colliding against the inner circumferential surface of the hermetic container 100 may be emitted to the outside of the hermetic container 100 as noise. However, the noise/frequency in the hermetic container 100 is irregularly reflected by the irregular reflection portion 310 and dissipated.

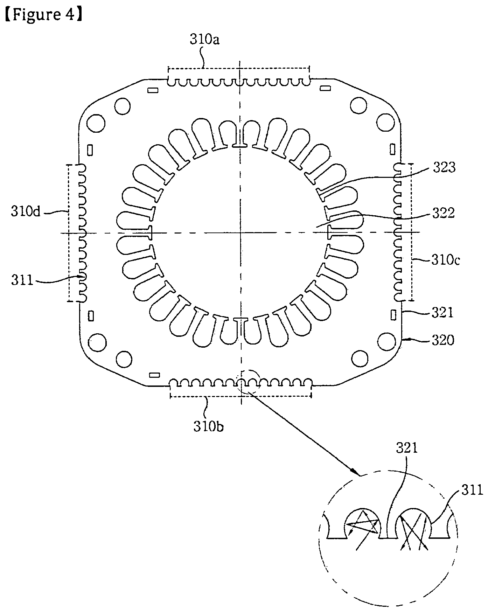

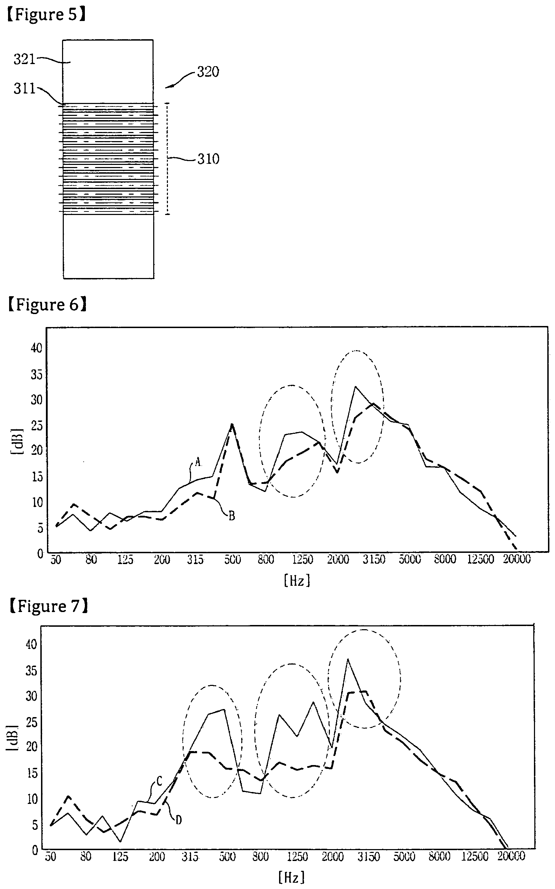

FIGS. 4 and 5 are a front view and a side view of a stator applied to the embodiment of the reciprocating compressor according to the present invention.

As illustrated in FIGS. 4 and 5, an irregular reflection portion 310 including a plurality of concave grooves 311 is formed on each face of the stator 320. Preferably, the stator 320 including the irregular reflection portion 310 is made of a metal material reflecting noise and vibration.

A plane portion 321 is provided on each face of the outer circumference of the stator 320. The stator 320 is generally formed in the shape of a quadrangle and shaped into a polygon with rounded edges. A hollow portion 322 is provided in the stator 320. A plurality of slots 323 are provided radially from the hollow portion 322. A coil is wound through the slots 323.

In the irregular reflection portion 310 (310a, 310b, 310c and 310d), a plurality of grooves 311 are formed in each plane portion 321 of the stator 320 in a determined pattern. For example, 13 semicircular grooves having a diameter of 3 mm are formed at regular intervals as the grooves 311 of the irregular reflection portion 310. Here, the grooves 311 are formed in the plane portions 321 of the stator 320 toward the hollow portion 222.

The irregular reflection portions 310 (310a, 310b, 310c and 310d) are formed to be symmetric in the horizontal or vertical direction with respect to the plane portions 321 of the stator 320, respectively. That is, the two irregular reflection portions 310a and 310b are provided on the plane portions 321 of the stator 320 which are parallel to the actual vibration direction of the reciprocating compressor, and the two irregular reflection portions 310c and 310d are provided on the plane portions 321 of the stator 320 which are perpendicular to the actual vibration direction of the reciprocating compressor. It is to be noted that the irregular reflection portion 310 (310a, 310b, 310c and 310d) may be formed on at least one of the plane portions 321 of the stator 320. Since noise and vibration are significantly generated in the actual vibration direction during the operation of the reciprocating compressor, they can be considerably reduced by the irregular reflection portions 310a and 310b provided in the actual vibration direction.

The irregular reflection portion 310 (310a, 310b, 310c and 310d) is formed in the shape of a series of grooves. Noise/frequency/vibration/sound wave generated during the operation of the compressor is reflected by the inner circumferential surface of the hermetic container 100 (refer to FIG. 3) to the grooves 311, successively reflected in the grooves 311, and gradually dissipated. Some noise is reflected from the inside to the outside of the grooves 311 and moved to the inner circumferential surface of the hermetic container 100. However, as the noise is reflected by the inside of the grooves 331 at a certain angle and collides against the inner circumferential surface of the hermetic container 100 (refer to FIG. 3), it is gradually reduced. Therefore, the diameter of the grooves 311 of the irregular reflection portion 310 is calculated by the formula (f=c/λ), wherein f represents a frequency, c a sound speed of refrigerant, and λ a diameter of the groove 311. For example, according to the present invention, the diameter of the grooves 311 of the irregular reflection portion 310 is 3 mm to reduce low frequencies of 400 Hz to 500 Hz.

Accordingly, the noise and vibration generated by the components during the operation of the reciprocating compressor are reflected by the inner circumferential surface of the hermetic container 100 (refer to FIG. 3), and then reflected by the grooves 311 of the irregular reflection portion 310. Some of them are discharged to the outside of the grooves 311 of the irregular reflection portion 310, but the other are successively reflected in the grooves 311 of the irregular reflection portion 310. As a result, the noise and vibration are gradually dissipated.

FIG. 6 is a graph of noise levels by X-direction frequencies in the conventional reciprocating compressor and the reciprocating compressor of the present invention, respectively.

In the graph of FIG. 6, noise was measured 30 cm apart from the reciprocating compressor in the direction (hereinafter, X direction) perpendicular to the vibration direction of the reciprocating compressor during the operation of the reciprocating compressor. While A indicates noise changes in the conventional reciprocating compressor in which the irregular reflection portion is not provided on the plane portion of the stator as illustrated in FIG. 2, B indicates noise changes in the reciprocating compressor of the present invention in which the irregular reflection portion is provided on the plane portion of the stator as illustrated in FIG. 4. According to the result of measuring noise in X direction, large changes occurred in high frequency regions of 1 k to 1.6 k and 2.5 kHz. The reciprocating compressor of the present invention reduced the high-frequency noise more than the conventional reciprocating compressor by about 5 to 10 dB.

FIG. 7 is a graph of noise levels by Y-direction frequencies in the conventional reciprocating compressor and the reciprocating compressor of the present invention, respectively.

In the graph of FIG. 7, noise was measured 30 cm apart from the reciprocating compressor in the direction (hereinafter, Y direction) parallel to the vibration direction of the reciprocating compressor during the operation of the reciprocating compressor. While C indicates noise changes in the conventional reciprocating compressor in which the irregular reflection portion is not provided on the plane portion of the stator as illustrated in FIG. 2, D indicates noise changes in the reciprocating compressor of the present invention in which the irregular reflection portion is provided on the plane portion of the stator as illustrated in FIG. 4. According to the result of measuring noise in Y direction, the reciprocating compressor of the present invention reduced noise more than the conventional reciprocating compressor by about 5 to 10 dB in frequency regions of 400 Hz to 500 Hz, 1 k to 1.6 k and 2.5 kHz, respectively. While the high-frequency region has a short arrival distance by using short waves, the low-frequency region has a long arrival distance by using long waves. Therefore, the low-frequency noise is sensed greater than the high-frequency noise. However, according to the result of measuring noise in Y direction, the reciprocating compressor of the present invention reduced noise more than the conventional reciprocating compressor in the low-frequency region of 400 Hz to 500 Hz as in the high-frequency region, thereby reducing the sensory noise.

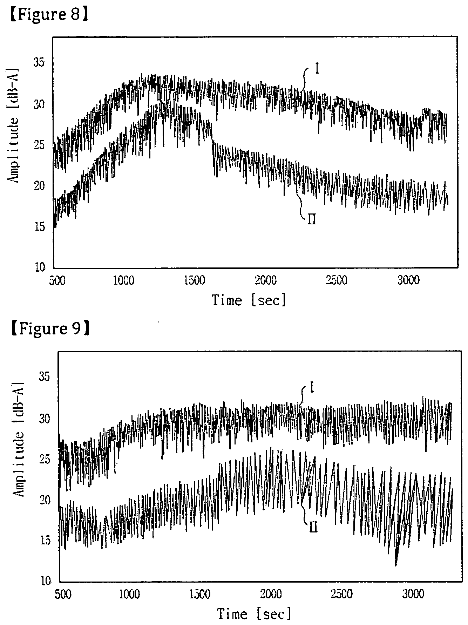

FIG. 8 is a graph of noise changes in 400 Hz frequency region in the conventional reciprocating compressor and the reciprocating compressor of the present invention, respectively, and FIG. 9 is a graph of noise changes in 500 Hz frequency region in the conventional reciprocating compressor and the reciprocating compressor of the present invention, respectively.

The graphs of FIGS. 8 and 9 illustrate the noise reduction effect in 400 Hz and 500 Hz frequency regions generated by the resonance in the inner space of the reciprocating compressor. In FIGS. 8 and 9, while I indicates noise in the conventional reciprocating compressor in which the irregular reflection portion is not provided on the plane portion of the stator as illustrated in FIG. 2, II indicates noise in the reciprocating compressor of the present invention in which the irregular reflection portion is provided on the plane portion of the stator as illustrated in FIG. 4. Here, the reciprocating compressor of the present invention reduced noise more than the conventional reciprocating compressor in 400 Hz frequency region by average of 8 dB and in 500 Hz frequency region by average of 10 dB. As described above, the low-frequency regions of 400 Hz and 500 Hz have a long arrival distance by using long waves, and thus easily operate as a noise source in the reciprocating compressor. However, even if frequencies of the low-frequency region are generated, the compressor of the present invention which includes the irregular reflection portion can reduce noise more than the conventional compressor which does not include the irregular reflection portion by about 8 to 10 dB.

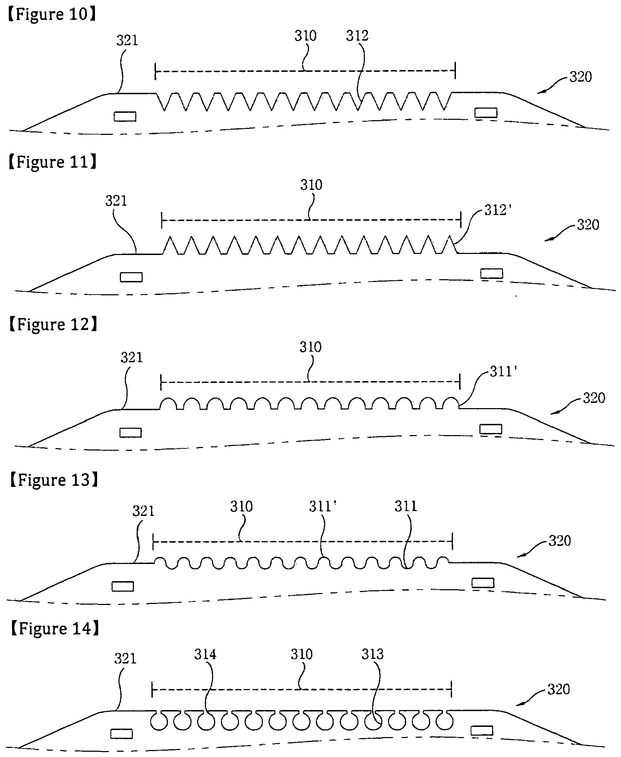

FIG. 10 is a view of a part of a second embodiment of the stator which is the major component of the present invention.

As illustrated in FIG. 10, in the second embodiment of the stator, an irregular reflection portion 310 in which a plurality of polygonal grooves 312 are arranged at regular intervals is integrally formed with a plane portion 321 formed on an outer circumferential surface of the stator 320. Here, the section of the grooves 312 has a 'V' shape having two faces. The grooves 312 are formed on the outer circumferential surface of the stator 320 to be symmetric in a certain pattern. In addition, the width and depth of the grooves 312 are set to irregularly reflect low frequencies generated in the components. For example, 13 grooves 312 having a width of 3 mm may be used.

FIG. 11 is a view of a part of a third embodiment of the stator which is the major component of the present invention.

As illustrated in FIG. 11, in the third embodiment of the stator, an irregular reflection portion 310 in which a plurality of polygonal protrusions 312' are arranged at regular intervals is integrally formed with a plane portion 321 formed on an outer circumferential surface of the stator 320. Here, the section of the protrusions 312' has a 'Λ' shape having two faces and the width of the protrusions 312' is constantly reduced from the plane portion 321 to the outside (or in the radial direction). Moreover, the width and length of the protrusions 312' are set to irregularly reflect low frequencies generated in the components. For example, 13 protrusions 312' having a width of 3 mm may be used.

FIG. 12 is a view of a part of a fourth embodiment of the stator which is the major component of the present invention.

As illustrated in FIG. 12, in the fourth embodiment of the stator, an irregular reflection portion 310 in which a plurality of semicircular protrusions 311' are arranged at regular intervals is integrally formed with a plane portion 321 formed on an outer circumferential surface of the stator 320. Here, the section of the protrusions 311' has a semicircular shape. The protrusions 311' protrude radially from the plane portion 321. Additionally, the diameter of the protrusions 311' is set to irregularly reflect low frequencies generated in the components. For example, 13 protrusions 311' having a diameter of 3 mm may be used.

FIG. 13 is a view of a part of a fifth embodiment of the stator which is the major component of the present invention.

As illustrated in FIG. 13, in the fifth embodiment of the stator, an irregular reflection portion 310 in which semicircular grooves 311 and semicircular protrusions 311' are alternately arranged is integrally formed with a plane portion 321 formed on an outer circumferential surface of the stator 320. Here, the grooves 311 are formed in the plane portion 321 of the stator 320 toward the hollow portion 322 (refer to FIG. 4), and the protrusions 311' protrude radially from the stator 320 and are formed on both sides of the grooves 311. In addition, the diameter of the grooves 311 and the diameter of the protrusions 311' are set to irregularly reflect low frequencies generated in the components. For example, 12 semicircular grooves 311 having a diameter of 3 mm may be formed between 13 semicircular protrusions 311' having a diameter of 3 mm, respectively. It is obvious that the grooves or protrusions constituting the irregular reflection portion 310 may be formed in various shapes and numbers according to frequencies generated in the compressor.

FIG. 14 is a view of a part of a sixth embodiment of the stator which is the major component of the present invention.

As illustrated in FIG. 14, in the sixth embodiment of the stator, an irregular reflection portion 310 in which a plurality of concave grooves 313 and a plurality of guide portions 314 reducing the width of the entrances of the grooves 313 are alternately arranged is integrally formed with a plane portion 321 formed on an outer circumferential surface of the stator 320. Here, the section of the grooves 313 has a circular shape with an open entrance. The guide portions 314 are regularly formed to narrow the width of the entrances of the grooves 313 such that noise is successively reflected in the grooves 313 and dissipated. Moreover, the diameter of the grooves 313 is set to irregularly reflect low frequencies generated in the components. For example, 13 grooves 313 having a maximum diameter of 3 mm may be formed at regular intervals, and guide portions 314 reducing the width of the entrances of the grooves 313 may be provided between the grooves 313, respectively.

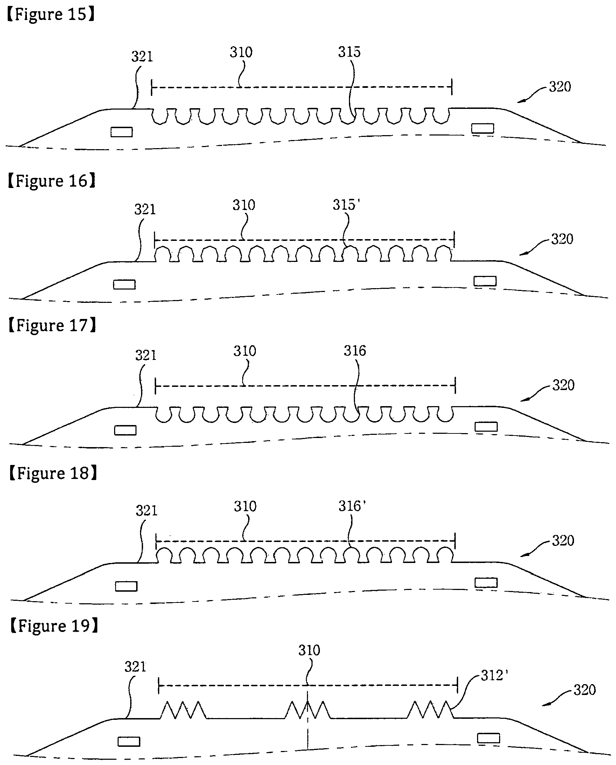

FIGS. 15 and 16 are views of parts of seventh and eighth embodiments of the stator which is the major component of the present invention, respectively.

As illustrated in FIG. 15, in the seventh embodiment of the stator, an irregular reflection portion 310 in which a plurality of polygonal grooves 315 are arranged at regular intervals is integrally formed with a plane portion 321. As illustrated in FIG. 16, in the eighth embodiment of the stator, an irregular reflection portion 310 in which a plurality of polygonal protrusions 315' are arranged at regular intervals is integrally formed with a plane portion 321. Here, the sectional shape of the grooves 315 and the sectional shape of the protrusions 315' are identically a plurality of straight faces (or polygons). The width of the grooves 315 is increased toward the hollow portion 322 (refer to FIG. 4) of the stator 320 and then decreased, and the width of the protrusions 315' is increased in the radial direction of the stator 320 and then decreased. In addition, the width of the grooves 315 and the width of the protrusions 315' are set to irregularly reflect low frequencies generated in the components. For example, 13 grooves 315 having a maximum diameter of 3 mm may be used, or 13 protrusions 315' having a maximum diameter of 3 mm may be used.

Accordingly, when noise generated during the operation of the compressor is reflected by the inner surface of the hermetic container 100 (refer to FIG. 3), if the reflected noise is introduced into the grooves 315, it is successively reflected by the straight faces of the grooves 315 and dissipated, or if the reflected noise is introduced between the protrusions 315', it is repeatedly reflected by the straight faces of the protrusions 315' and dissipated. FIGS. 17 and 18 are views of parts of seventh and eighth embodiments of the stator which is the major component of the present invention, respectively.

As illustrated in FIG. 17, in the ninth embodiment of the stator, an irregular reflection portion 310 in which grooves 316 including curved portions are arranged at regular intervals is integrally formed with a plane portion 321. As illustrated in FIG. 18, in the tenth embodiment of the stator, an irregular reflection portion 310 in which protrusions 316' including curved portions are arranged at regular intervals is integrally formed with a plane portion 321. Here, straight faces having the same height as the plane portion 321 are provided between the grooves 316 and between the protrusions 316'. For example, the grooves 316 or the protrusions 316' may be formed in the shape of a curved portion between the straight faces having the same height as the plane portion 321 of the stator 320.

FIG. 19 is a view of a part of an eleventh embodiment of the stator which is the major component of the present invention.

As illustrated in FIG. 19, in the eleventh embodiment of the stator, an irregular reflection portion 310 in which a plurality of protrusions 312' are arranged in a certain pattern is integrally formed with a plane portion 321. Here, the pattern is to arrange three protrusions 312' formed in the shape of 'Λ' having two straight faces. These patterns may be formed on the plane portion 321 at regular intervals. Meanwhile, grooves may be formed in the above pattern like the protrusions 312'.

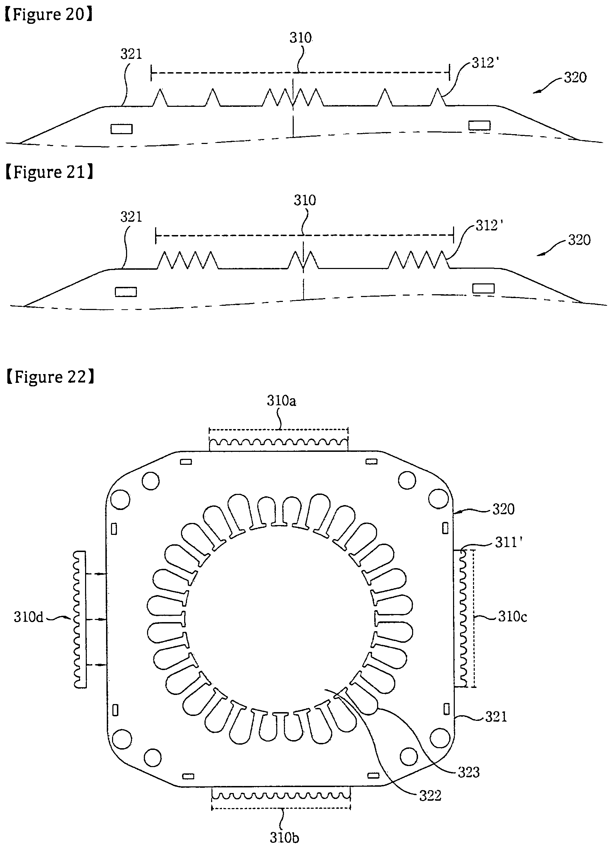

FIG. 20 is a view of a part of a twelfth embodiment of the stator which is the major component of the present invention.

As illustrated in FIG. 20, in the twelfth embodiment of the stator, an irregular reflection portion 310 in which protrusions 312' are arranged with the number increasing toward the center is integrally formed with a plane portion 321. For example, four protrusions 312' having a sectional shape of 'Λ' may be successively formed in the center of the plane portion 321, and one protrusion 312' may be arranged on parts of the plane portion 321 spaced apart from the protrusions 312' by a certain interval. In the meantime, grooves may be formed in the above pattern like the protrusions 312'.

FIG. 21 is a view of a part of a thirteenth embodiment of the stator which is the major component of the present invention.

As illustrated in FIG. 21, in the thirteenth embodiment of the stator, an irregular reflection portion 310 in which two successive protrusions 312' are formed in the center and four successive protrusions 312' are formed at positions spaced apart from the two protrusions 312' is integrally formed with a plane portion 321. In addition, grooves may be formed in the above pattern like the protrusions 312'.

The irregular reflection portions 310 applied to the embodiments of the stator of FIGS. 19 to 21 are nothing but exemplary embodiments. The grooves or the protrusions may be formed in various shapes and patterns and changed according to the kind, specification and the like of the compressor.

FIG. 22 is a view of a fourteenth embodiment of the stator which is the major component of the present invention.

As illustrated in FIG. 22, the fourteenth embodiment of the stator is the same as the conventional stator. An irregular reflection portion 310 (310a, 310b, 310c and 310d) may be separately formed and attached to a plane portion 321 of the stator 320.

Four plane portions 321 are provided on the outer circumference of the stator 320. The stator 320 is formed in the shape of a polygon with rounded edges. A hollow portion 322 is provided in the stator 320. Slots 323 are provided radially from the hollow portion 322. In the irregular reflection portion 310, a plurality of protrusions 311' are arranged at regular intervals. The irregular reflection portion 310 is manufactured as an independent component and attached to each plane portion 321 of the stator 320. Here, the two irregular reflection portions 310a and 310b are attached to the plane portions 321 of the stator 320 which are positioned in the direction (Y direction of FIG. 3) parallel to the vibration direction of the compressor, and the other two irregular reflection portions 310c and 310d are attached to the plane portions 321 of the stator 320 which are positioned in the direction (X direction of FIG. 3) perpendicular to the vibration direction of the compressor. However, the irregular reflection portion 310 may be mounted in at least one of the vibration direction of the compressor and the direction perpendicular to the vibration direction. For example, the irregular reflection portion 310 may be formed of 13 protrusions 311' arranged at regular intervals and attached to the plane portions 321 of the stator 320 to be symmetric.

Further, the irregular reflection portion 310 may be formed in the shapes, numbers or patterns applied to the second to the thirteenth embodiments. As described above, noise is successively reflected in the irregular reflection portion 310, and thus dissipated.

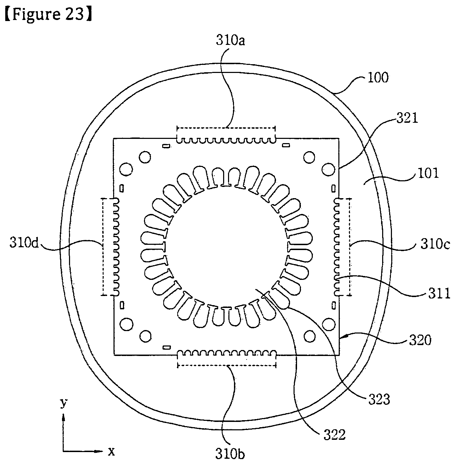

FIG. 23 is a view showing a state where a fifteenth embodiment of the stator which is the major component of the present invention is used in a reciprocating compressor.

As illustrated in FIG. 23, a quadrangular stator 320 is mounted in an elliptical hermetic container 100. An irregular reflection portion 310 is provided on a plane portion 321 of the stator 320.

The hermetic container 100 forms a determined hermetic space and includes components such as the stator 320. The section of the hermetic container 100 has a circular shape. A spacing 101 is defined between the hermetic container 100 and the mounted stator 320. The stator 320 is formed in the shape of a quadrangle with four faces. Irregular reflection portions 310 (310a, 310b, 310c and 310d) are provided to be symmetric on the plane portions 321 which are outer circumferential surfaces of the stator 320. Here, in order to improve the noise reduction effect of the irregular reflection portions 310 (310a, 310b, 310c and 310d), the plane portions 321 of the stator 320 having the irregular reflection portions 310 (310a, 310b, 310c and 310d) are preferably formed in the vibration direction (Y direction) of the compressor or the direction (X direction) perpendicular thereto.

The irregular reflection portions 310 (310a, 310b, 310c and 310d) include both the irregular reflection portions 310a and 310b formed in the vibration direction (Y direction) of the compressor and the irregular reflection portions 310c and 310d formed in the direction (X direction) perpendicular to the vibration direction of the compressor, but may include at least one of them. For example, an irregular reflection portion 310 in which 13 grooves 311 are formed at regular intervals may be provided on each of the four plane portions 321 of the stator 320.

Accordingly, as the hermetic container 100 is excited in Y direction during the operation of the compressor, noise/vibration/frequency is generated in the vibration direction (Y direction) or the direction (X direction) perpendicular to the vibration direction, vibrated in the spacing 101 between the inner circumferential surface of the hermetic container 100 and the stator 320, and reflected between the inner circumferential surface of the hermetic container 100 and the irregular reflection portion 310 of the stator 320. Here, the noise is successively reflected in the grooves 311 of the irregular reflection portion 310, and thus gradually dissipated. Even if the noise is reflected by the inside of the grooves 311 of the irregular reflection portion 310 to the inner circumferential surface of the hermetic container 100, since the noise is bent at a determined angle, it is reduced. The above process is repeated to reduce the noise generated in the spacing 101 of the hermetic container 100.

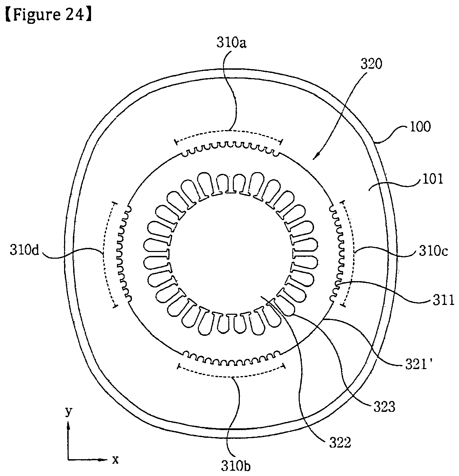

FIG. 24 is a view showing a state where a sixteenth embodiment of the stator which is the major component of the present invention is used in a reciprocating compressor.

As illustrated in FIG. 24, a circular stator 320 is mounted in an elliptical hermetic container 100. An irregular reflection portion 310 is provided on an outer circumferential surface 321' of the stator 320.

The section of the hermetic container 100 has a circular shape. A spacing 101 is defined between the hermetic container 100 and the mounted stator 320.

The stator 320 is formed in the shape of a circle. Irregular reflection portions 310 (310a, 310b, 310c and 310d) are provided on the outer circumferential surface 321' of the stator 320 to be symmetric.

The irregular reflection portion 310 (310a, 310b, 310c and 310d) may be formed in the vibration direction (Y direction) of the compressor or the direction (X direction) perpendicular to the vibration direction of the compressor and may be formed in some part of them. For example, an irregular reflection portion 310 in which 13 grooves 311 are formed at regular intervals may be provided on four parts of the outer circumferential surface 321' of the stator 320, i.e., in the vibration direction (Y direction) of the compressor and the direction (X direction) perpendicular thereto, respectively.

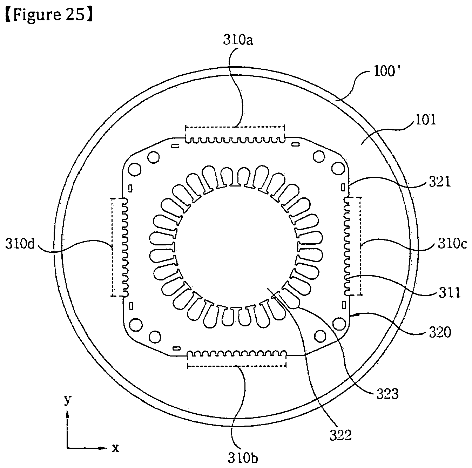

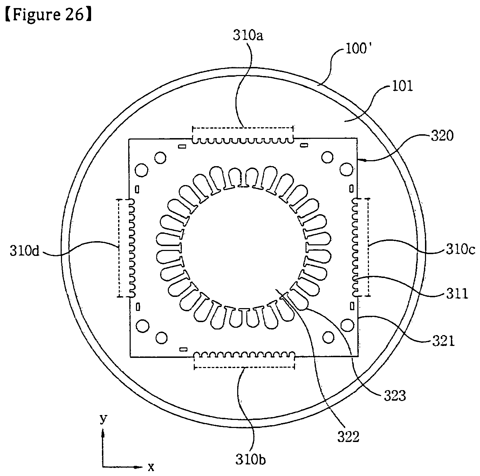

FIGS. 25 and 26 are views showing a state where seventeenth and eighteenth embodiments of the stator which is the major component of the present invention are used in a reciprocating compressor, respectively.

As illustrated in FIGS. 25 and 26, a polygonal stator 320 is mounted in a circular hermetic container 100'. An irregular reflection portion 310 is provided on a plane portion 321 of the stator 320.

The section of the hermetic container 100' has a circular shape. A spacing 101 is defined between the hermetic container 100' and the mounted stator 320.

As illustrated in FIG. 25, the stator 320 may be formed in the shape of a quadrangle with four faces and shaped into a polygon with rounded edges, or as illustrated in FIG. 26, the stator 320 may be formed in the shape of a quadrangle with four faces. Irregular reflection portions 310 (310a, 310b, 310c and 310d) are provided to be symmetric on the plane portions 321 which are outer circumferential surfaces of the stator 320. Here, in order to improve the noise reduction effect of the irregular reflection portions 310 (310a, 310b, 310c and 310d), the plane portions 321 of the stator 320 including the irregular reflection portions 310 (310a, 310b, 310c and 310d) are preferably formed in the vibration direction (Y direction) of the compressor or the direction (X direction) perpendicular thereto.

The irregular reflection portions 310 (310a, 310b, 310c and 310d) include both the irregular reflection portions 310a and 310b formed in the vibration direction (Y direction) of the compressor and the irregular reflection portions 310c and 310d formed in the direction (X direction) perpendicular to the vibration direction of the compressor, but may include at least one of them. For example, an irregular reflection portion 310 in which 13 grooves 311 are formed at regular intervals may be provided on each of the four plane portions 321 of the stator 320.

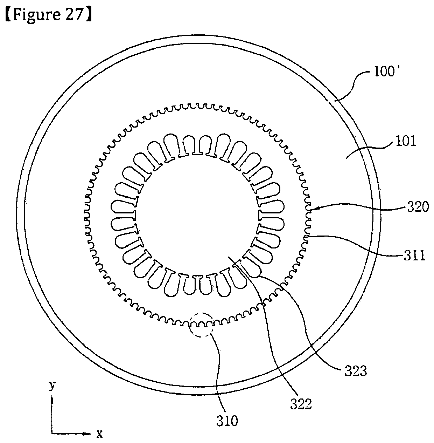

FIG. 27 is a view showing a state where a nineteenth embodiment of the stator which is the major component of the present invention is used in a reciprocating compressor.

As illustrated in FIG. 27, a circular stator 320 is mounted in a circular hermetic container 100'. An irregular reflection portion 310 is provided on the entire outer circumferential surface of the stator 320.

The irregular reflection portion 310 is formed of grooves 311 but may be formed of protrusions. Here, the irregular reflection portion 310 may be formed on the outer circumferential surface of the stator 320 in either the vibration direction (Y direction) of the compressor or the direction (X direction) perpendicular thereto, but may be formed on the entire outer circumferential surface of the stator 320 to improve the noise reduction effect and increase the surface area to improve the radiation effect of a motor.

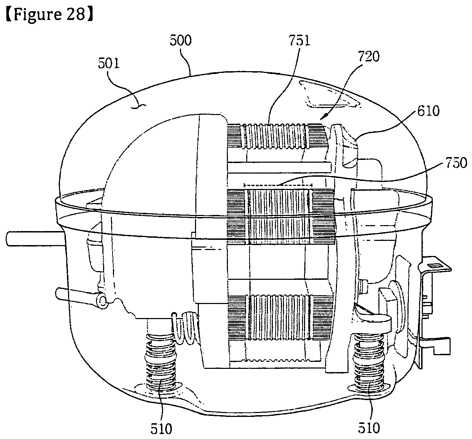

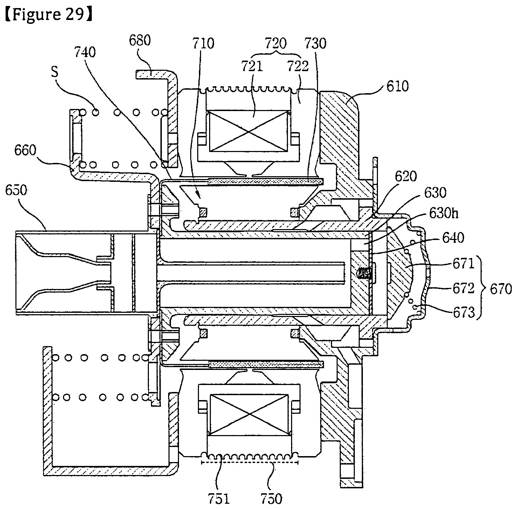

FIGS. 28 and 29 are a perspective view and a side-sectional view of an embodiment of a linear compressor according to the present invention.

As illustrated in FIGS. 28 and 29, in the embodiment of the linear compressor according to the present invention, a compression mechanism unit and a motor unit are installed in a hermetic container 500 to maintain a determined spacing 501. A determined irregular reflection portion is provided on an outer circumferential surface of the motor unit.

The hermetic container 500 is formed in the shape of a sphere to provide a receiving space.

Oil is stored in a lower portion of the hermetic container 500 and supplied to the compression mechanism unit to perform lubrication and cooling. The compression mechanism unit is elastically supported by four springs 510 at the lower portion of the hermetic container 500. This prevents vibration of the compression mechanism unit from being transferred to the hermetic container 500.

The compression mechanism unit includes a cylinder 620 integrally formed with a frame 610, and a piston 630. The frame 610 is generally manufactured by Al die-casting, and the following components are installed thereon. The cylinder 620 may be integrally formed with the frame 610 or insert-injection-molded and may have a compression space therein. One end of the piston 630 inserted into the cylinder 620 is blocked and provided with an inlet port 630h communicating with the compression space, and the other end of the piston 630 which is not inserted into the cylinder 620 is opened and expanded in the radius direction. Here, a thin suction valve 640 is installed on the inlet port 630h of the piston 630 to be opened and closed, and a suction muffler 650 and a supporter 660 are mounted at the open end of the piston 630. The suction muffler 650 not only guides the flow of refrigerant but also reduces noise caused by the flow of the refrigerant and the opening and closing of the valve. The supporter 660 elastically supports the piston 630 in the motion direction using springs S. In addition, a discharge valve assembly 670 including a discharge valve 671, a discharge cover 672 and a discharge valve spring 673 is installed at one end communicating with the compression space of the cylinder 620 to be opened and closed.

The motor unit includes an inner stator 710, an outer stator 720, a permanent magnet 730, and a connection member 740. The inner stator 710 is formed by stacking a plurality of laminations in the circumferential direction. The inner stator 710 is fixed to an outer circumferential surface of the cylinder 620 by a fixing ring (not shown). The outer stator 720 includes a coil winding body 721 around which a coil is wound in the circumferential direction, and core blocks 722 coupled to the coil winding body 721 at regular intervals in the circumferential direction. The core block 722 is formed by stacking laminations in some section in the circumferential direction. The outer stator 720 is fixed to maintain a determined interval in the outer circumferential direction of the inner stator 710. As a motor cover 680 is bolt-fastened to the frame 610, the outer stator 720 is fixed in the axial direction. The permanent magnet 730 is fixed to the connection member 740 and maintains a gap between the inner stator 710 and the outer stator 720. The connection member 740 is installed to connect the permanent magnet 730 to the piston 630.

An irregular reflection portion 750 is formed on the core block 722 of the outer stator 720. In a state where the core blocks 722 are mounted on the coil winding body 721, the irregular reflection portion 750 is formed on their radial surfaces. The irregular reflection portion 750 includes one or more of a groove 751 and a protrusion. In the embodiment of the linear compressor according to the present invention, an irregular reflection portion 750 including a plurality of grooves 751 is integrally formed with an outer circumferential surface of the outer stator 720. The irregular reflection portion 750 may include various patterns of the grooves 751 or the protrusions, and may be manufactured as a separate component and attached to the outer circumferential surface of the outer stator 720. Particularly, the diameter of the grooves 751 of the irregular reflection portion 750 is subject to the formula (f=c/λ), wherein f represents a frequency, c a sound speed of refrigerant, and λ a diameter of the groove 751. According to the present invention, the diameter of the grooves 751 is determined to reduce low frequencies of 400 Hz to 500 Hz. The operation of the linear compressor so constructed is as follows. When power is supplied to the coil winding body 721, the permanent magnet 730 is linearly reciprocated between the inner stator 710 and the outer stator 720 by an electromagnetic force. Noise/vibration/sound wave/frequency (hereinafter, referred to as 'noise') is generated in the respective components of the hermetic container 500 during the operation of the linear compressor and excited in the spacing 501 of the hermetic container 500. However, since the irregular reflection portion 750 is provided on the outer surface of the outer stator 720, the noise generated in the respective components collides against the inner circumferential surface of the hermetic container 500 and is reflected to the irregular reflection portion 750 of the outer stator 720. Here, the noise is successively reflected in the grooves 751 of the irregular reflection portion 750 and dissipated. Even if the noise is reflected from the inside to the outside of the grooves 751, it collides against the inner circumferential surface of the hermetic container 500 at a certain angle, and thus is gradually reduced.

As discussed earlier, the irregular reflection portion applied to the reciprocating compressor or the linear compressor may include a plurality of grooves and protrusions, and the grooves and the protrusions may be formed in specific shapes and certain patterns, which are nothing but exemplary embodiments of the present invention. It is to be noted that modifications in the number, shape and pattern of the grooves and the protrusions can be made within the scope of the present invention.

Therefore, according to the present invention, the noise generated during the driving of the compressor is repeatedly reflected in the irregular reflection portion or reflected to the outside of the irregular reflection portion at a specific angle. It is thus possible to reduce noise. In addition, the compressor includes the irregular reflection portion increasing the surface area on the outer circumferential surface of the motor unit, and thus improves the radiation effect of the motor unit and reduces the temperature of sucked refrigerant affected by the temperature of the motor unit. It is thus possible to improve efficiency of the compressor.

The present invention has been described in connection with the exemplary embodiments and the accompanying drawings. However, the scope of the present invention is not limited thereto but is defined by the appended claims.

## Claims

1. A compressor, comprising:
- a hermetic container (100, 100') into/from which refrigerant is sucked and discharged;
- a compression unit provided in the hermetic container (100, 100'), wherein the compression unit includes a cylinder (210, 620) and a piston (220, 630) operated in the cylinder (210, 620) to compress the refrigerant;
- a motor unit provided in the hermetic container (100, 100') to be connected to the piston (220, 630) of the compression unit and driving the piston (220, 630) of the compression unit, wherein the motor unit includes a stator (320, 720, 722); and
- one or more irregular reflection portions (310) integrally formed with or separately formed and attached to an outer circumferential surface of the stator (320, 720, 722), wherein the stator (320, 720, 722) is fixed to define a spacing (101) between the stator (320, 720, 722) and an inner circumferential surface of the hermetic container (100, 100'), and wherein noise generated during operation of the compressor is irregularly reflected by the one or more irregular reflection portions (310) and dissipated.

2. The compressor of claim 1, wherein the motor unit comprises a rotating shaft (340), a rotor (330) having the rotating shaft (340) fixed to a center thereof, and the stator (320) installed around the rotor (330) and rotating the rotor (330) by a mutual electromagnetic force, wherein the irregular reflection portion (310) is provided on the stator (320).

3. The compressor of claim 1 or 2, wherein the compression unit comprises the cylinder (210) having a compression space in which the refrigerant is compressed, and the piston (220) reciprocated in the compression space and compressing the refrigerant, and the motor unit further comprises a connecting rod (350) converting the rotational motion of a rotating shaft (340) into the linear reciprocating motion of the piston (220), wherein the compressor is a reciprocating compressor.

4. The compressor of claim 1, wherein the motor unit comprises an inner stator (710), an outer stator (720) fixed to the circumference of the inner stator (710) to maintain a certain interval, and a permanent magnet (730) maintaining a gap between the inner stator (710) and the outer stator (720) and linearly reciprocated by a mutual electromagnetic force, wherein the irregular reflection portion (310) is provided on the outer stator (720).

5. The compressor of claim 4, wherein the compression unit comprises the cylinder (620) having a compression space in which the refrigerant is compressed, the piston (630) linearly reciprocated in the cylinder (620) and compressing the refrigerant, and one or more springs (S) installed to elastically support the piston (630), and the motor unit further comprises a connection member (740) connecting the permanent magnet (730) to the piston (630) such that the permanent magnet (730) and the piston (630) are linearly reciprocated as one body, wherein the compressor is a linear compressor.

6. The compressor of any one of claims 1 to 5, wherein the irregular reflection portion (310) comprises one or more of a groove and a protrusion.

7. The compressor of claim 6, wherein the section of the groove or the protrusion has a curved shape or a polygonal shape.

8. The compressor of anyone of claims 1 to 7, wherein the irregular reflection portions (310) are formed on the outer circumferential surface of the motor unit to be symmetric.

9. The compressor of anyone of claims 1 to 8, wherein the grooves or the protrusions of the irregular reflection portion (310) are formed on the outer circumferential surface of the motor unit at regular intervals.

10. The compressor of anyone of claims 1 to 8, wherein the grooves or the protrusions of the irregular reflection portion (310) are formed on the outer circumferential surface of the motor unit at irregular intervals.

11. The compressor of anyone of claims 1 to 10, wherein the irregular reflection portion (310) is provided on a plane of the outer circumferential surface of the motor unit.

12. The compressor of anyone of claims 1 to 11, wherein the compressor is vibrating in the refrigerant-compressing direction and the opposite direction, wherein the irregular reflection portion (310) is provided on one or more of the outer circumferential surface of the motor unit which is parallel to the vibration direction of the compressor and the outer circumferential surface of the motor unit which is perpendicular to the vibration direction of the compressor.

13. The compressor of claim 12, wherein the section of the hermetic container (100, 100') cut in the vibration direction of the compressor has a circular or elliptical shape.

## Patentansprüche

1. Kompressor, der Folgendes umfasst:
- einen luftdichten Behälter (100, 100'), in den Kühlmittel gesaugt und von dem Kühlmittel abgeführt wird;
- eine Kompressionseinheit, die in dem luftdichten Behälter (100, 100') vorgesehen ist, wobei die Kompressionseinheit einen Zylinder (210, 620) und einen Kolben (220, 630), der in dem Zylinder (210, 620) betätigt wird, um das Kühlmittel zu komprimieren, umfasst;
- eine Motoreinheit, die in dem luftdichten Behälter (100, 100') vorgesehen ist, um mit dem Kolben (220, 630) der Kompressionseinheit verbunden zu werden und die den Kolben (220, 630) der Kompressionseinheit antreibt, wobei die Motoreinheit einen Stator (320, 720, 722) umfasst; und
- einen oder mehrere Abschnitte (310) zur diffusen Reflexion, die mit einer Außenumfangsfläche des Stators (320, 720, 722) einteilig ausgebildet oder getrennt davon ausgebildet und daran befestigt sind, wobei der Stator (320, 720, 722) feststehend ist, um einen Abstand (101) zwischen dem Stator (320, 720, 722) und einer Innenumfangsfläche des luftdichten Behälters (100, 100') zu definieren, und wobei Geräusche, die während des Betriebs des Kompressors erzeugt werden, durch den einen oder mehrere Abschnitte (310) zur diffusen Reflexion diffus reflektiert und abgebaut werden.

2. Kompressor nach Anspruch 1, wobei die Motoreinheit eine drehbare Welle (340), einen Rotor (330), an dessen Zentrum die drehbare Welle (340) befestigt ist, und den Stator (320), der um den Rotor (330) installiert ist und den Rotor (330) durch eine wechselseitige elektromagnetische Kraft dreht, umfasst, wobei der Abschnitt (310) zur diffusen Reflexion an dem Stator (320) vorgesehen ist.

3. Kompressor nach Anspruch 1 oder 2, wobei die Kompressionseinheit den Zylinder (210), der einen Kompressionsraum aufweist, in dem das Kühlmittel komprimiert wird, und den Kolben (220), der in dem Kompressionsraum hin und her bewegt wird und das Kühlmittel komprimiert, umfasst und wobei die Motoreinheit ferner eine Verbindungsstange (350) umfasst, die die Drehbewegung einer drehbaren Welle (340) in die geradlinige Hin- und Herbewegung des Kolbens (220) umsetzt, wobei der Kompressor ein Kompressor ist, der sich hin und her bewegt.

4. Kompressor nach Anspruch 1, wobei die Motoreinheit einen inneren Stator (710), einen äußeren Stator (720), der an dem Umfang des inneren Stators (710) befestigt ist, um einen bestimmten Abstand aufrechtzuerhalten, und einen Permanentmagneten (730), der einen Spalt zwischen dem inneren Stator (710) und dem äußeren Stator (720) aufrechterhält und durch eine wechselseitige elektromagnetische Kraft geradlinig hin und her bewegt wird, umfasst, wobei der Abschnitt (310) zur diffusen Reflexion bei dem äußeren Stator (720) vorgesehen ist.

5. Kompressor nach Anspruch 4, wobei die Kompressionseinheit den Zylinder (620), der einen Kompressionsraum aufweist, in dem das Kühlmittel komprimiert wird, den Kolben (630), der sich in dem Zylinder (620) geradlinig hin und her bewegt und das Kühlmittel komprimiert, und eine oder mehrere Federn (S), die installiert sind, um den Kolben (630) elastisch zu halten, umfasst, und wobei die Motoreinheit ferner ein Verbindungselement (740) umfasst, das den Permanentmagneten (730) mit dem Kolben (630) verbindet, so dass der Permanentmagnet (730) und der Kolben (630) als ein Körper geradlinig hin und her bewegt werden, wobei der Kompressor ein linear arbeitender Kompressor ist.

6. Kompressor nach einem der Ansprüche 1 bis 5, wobei der Abschnitt (310) zur diffusen Reflexion eine oder mehrere Rillen und Vorsprünge umfasst.

7. Kompressor nach Anspruch 6, wobei der Abschnitt der Rille oder des Vorsprungs eine gebogene Form oder eine Polygonform aufweist.

8. Kompressor nach einem der Ansprüche 1 bis 7, wobei die Abschnitte (310) zur diffusen Reflexion so an der Außenumfangsfläche der Motoreinheit ausgebildet sind, dass sie symmetrisch sind.

9. Kompressor nach einem der Ansprüche 1 bis 8, wobei die Rillen oder die Vorsprünge des Abschnitts (310) zur diffusen Reflexion an der Außenumfangsfläche der Motoreinheit in regelmäßigen Abständen ausgebildet sind.

10. Kompressor nach einem der Ansprüche 1 bis 8, wobei die Rillen oder die Vorsprünge des Abschnitts (310) zur diffusen Reflexion an der Außenumfangsfläche der Motoreinheit in unregelmäßigen Abständen ausgebildet sind.

11. Kompressor nach einem der Ansprüche 1 bis 10, wobei der Abschnitt (310) zur diffusen Reflexion bei einer Ebene der Außenumfangsfläche der Motoreinheit vorgesehen ist.

12. Kompressor nach einem der Ansprüche 1 bis 11, wobei der Kompressor in der Kompressionsrichtung des Kühlmittels und in der entgegengesetzten Richtung schwingt, wobei der Abschnitt (310) zur diffusen Reflexion an der Außenumfangsfläche der Motoreinheit, die parallel zu der Schwingungsrichtung des Kompressors liegt, und/oder der Außenumfangsfläche der Motoreinheit, die senkrecht zu der Schwingungsrichtung des Kompressors liegt, ausgebildet ist.

13. Kompressor nach Anspruch 12, wobei der Querschnitt des luftdichten Behälters (100, 100') in der Schwingungsrichtung des Kompressors eine kreisförmige oder elliptische Form aufweist.

## Revendications

1. Compresseur comprenant :
- un conteneur hermétique (100, 100') vers/à partir duquel un réfrigérant est aspiré et évacué ;
- une unité de compression prévue dans le conteneur hermétique (100, 100'), dans lequel l'unité de compression inclut un cylindre (210, 620) et un piston (220, 630) actionné dans le cylindre (210, 620) afin de comprimer le réfrigérant ;
- une unité de moteur prévue dans le conteneur hermétique (100, 100') afin d'être connectée au piston (220, 130) de l'unité de compression et d'entraîner le piston (220, 630) de l'unité de compression, dans lequel l'unité de moteur inclut un stator (320, 720, 722) ; et
- une ou plusieurs portions réfléchissantes irrégulières (310) intégralement formées avec ou séparément formées et attachées à une surface circonférentielle extérieure du stator (320, 720, 722), dans lequel le stator (320, 720, 722) est fixé de manière à définir un espacement (101) entre le stator (320, 720, 722) et une surface circonférentielle intérieure du conteneur hermétique (100, 100'), et dans lequel le bruit généré pendant le fonctionnement du compresseur est réfléchi de manière irrégulière par lesdites une ou plusieurs portions réfléchissantes irrégulières (310) et est dissipé.

2. Compresseur selon la revendication 1, dans lequel l'unité de moteur comprend un axe rotatif (340), un rotor (330) ayant l'axe rotatif (340) fixé à son centre, et le stator (320) installé autour du rotor (330) et mettant en rotation le rotor (330) au moyen d'une force électromagnétique réciproque, dans lequel la portion réfléchissante irrégulière (310) est prévue sur le stator (320).

3. Compresseur selon la revendication 1 ou 2, dans lequel l'unité de compression comprend le cylindre (210) ayant un espace de compression dans lequel le réfrigérant est comprimé, et le piston (220) effectuant un mouvement de va-et-vient dans l'espace de compression et comprimant le réfrigérant, et l'unité de moteur comprend en outre une tige de connexion (350) convertissant le mouvement de rotation de l'axe rotatif (340) en un mouvement de va-et-vient linéaire du piston (220), dans lequel le compresseur est un compresseur alternatif.

4. Compresseur selon la revendication 1, dans lequel l'unité de moteur comprend un stator interne (710), un stator externe (720) fixé à la circonférence du stator interne (710) de manière à maintenir un certain intervalle, et un aimant permanent (730) maintenant un espace entre le stator interne (710) et le stator externe (720) et effectuant un mouvement de va-et-vient linéaire dû à une force électromagnétique réciproque, dans lequel la portion réfléchissante irrégulière (310) est prévue sur le stator externe (720).

5. Compresseur selon la revendication 4, dans lequel l'unité de compression comprend le cylindre (620) ayant un espace de compression dans lequel le réfrigérant est comprimé, le piston (630) effectuant un mouvement de va-et-vient linéaire dans le cylindre (620) et comprimant le réfrigérant, et un ou plusieurs ressorts (S) installés de manière à supporter élastiquement le piston (630), et l'unité de moteur comprend en outre un élément de liaison (740) reliant l'aimant permanent (730) au piston (630) de sorte que l'aimant permanent (730) et le piston (630) effectuent un mouvement de va-et-vient linéaire en formant un seul corps, dans lequel le compresseur est un compresseur linéaire.

6. Compresseur selon l'une quelconque des revendications 1 à 5, dans lequel la portion réfléchissante irrégulière (310) comprend un ou plusieurs éléments parmi une rainure et une saillie.

7. Compresseur selon la revendication 6, dans lequel la section de la rainure ou de la saillie présente une forme incurvée ou une forme polygonale.

8. Compresseur selon l'une quelconque des revendications 1 à 7, dans lequel les portions réfléchissantes irrégulières (310) sont formées sur la surface circonférentielle extérieure de l'unité de moteur de manière à être symétriques.

9. Compresseur selon l'une quelconque des revendications 1 à 8, dans lequel les rainures ou les saillies de la portion réfléchissante irrégulière (310) sont formées sur la surface circonférentielle extérieure de l'unité de moteur à intervalles réguliers.

10. Compresseur selon l'une quelconque des revendications 1 à 8, dans lequel les rainures ou les saillies de la portion réfléchissante irrégulière (310) sont formées sur la surface circonférentielle extérieure de l'unité de moteur à intervalles irréguliers.

11. Compresseur selon l'une quelconque des revendications 1 à 10, dans lequel la portion réfléchissante irrégulière (310) est prévue sur un plan de la surface circonférentielle extérieure de l'unité de moteur.

12. Compresseur selon l'une quelconque des revendications 1 à 11, dans lequel le compresseur est en vibration dans la direction de compression du réfrigérant et dans la direction opposée, dans lequel la portion réfléchissante irrégulière (310) est prévue sur une ou plusieurs surfaces parmi la surface circonférentielle extérieure de l'unité de moteur qui est parallèle à la direction de vibration du compresseur et la surface circonférentielle extérieure de l'unité de moteur qui est perpendiculaire à la direction de vibration du compresseur.

13. Compresseur selon la revendication 12, dans lequel la section du conteneur hermétique (100, 100') en coupe dans la direction de vibration du compresseur présente une forme circulaire ou elliptique.
